# EUROPÄISCHE PATENTSCHRIFT

(11) **EP 1 286 296 B1**
(45) Veröffentlichungstag und Bekanntmachung des Hinweises auf die Patenterteilung: **02.03.2005**
(21) Anmeldenummer: 02011417.9
(22) Anmeldetag: 24.05.2002
(51) Int. Cl.: G06K 7/10

(54) **Vorrichtung zum optischen Abtasten einer maschinenlesbaren Markierung**
Apparatus for optically scanning machine readable markings
Dispositif de balayage optique pour marques lisibles par machine

(30) Priorität: 23.08.2001 DE 10141429
(43) Veröffentlichungstag der Anmeldung: 26.02.2003
(73) Patentinhaber: Wincor Nixdorf International GmbH, 33106 Paderborn (DE)
(72) Erfinder: Baitz, Guenter, 13629 Berlin (DE); Kamin, Hartmut, 10585 Berlin (DE)

(56) Entgegenhaltungen:
- US-A- 3 708 655
- US-A- 3 752 999
- US-A- 3 757 090

## Beschreibung

Die Erfindung betrifft eine Vorrichtung zum optischen Abtasten einer auf einem Gegenstand aufgebrachten maschinenlesbaren Markierung gemäß dem Oberbegriff des Anspruchs 1. Eine derartige Vorrichtung ist beispielsweise aus US-A-3 757 090 bekannt.

An einem Kassenstand eines Verkaufsgeschäftes müssen die von einem Kunden ausgewählten Artikel einzeln erfaßt werden. Dazu werden sie von einer Kassierperson einzeln mit einem Markierungsleser in optischen Kontakt gebracht, eine anstrengende und zeitraubende Arbeit. Es sind deshalb automatische Erfassungsverfahren vorgeschlagen worden, bei denen der Kunde die von ihm ausgewählten Artikel auf ein Transportband legt, welches diese einer automatischen Erkennung zuführt. Problematisch ist dabei, daß die Artikel ungeordnet und in beliebiger Position auf dem Transportband abgelegt werden. Besonders schwierig wird die Erfassung der auf einem Gegenstand aufgebrachten maschinenlesbaren Markierung, wenn dieser Gegenstand mit der Markierungsseite auf dem Transportband liegt.

In der EP 0 338 376 A2 ist deshalb eine Vorrichtung zum optischen Abtasten einer auf einem Gegenstand aufgebrachten maschinenlesbaren Markierung vorgeschlagen worden, die eine Transporteinrichtung mit zwei in Transportrichtung hintereinander liegenden endlosen Transportbändern und eine Abtasteinrichtung für die maschinenlesbare Markierung umfaßt. Ein zu der Abtasteinrichtung gehörender Strahlsender oder Spiegel ist unterhalb eines Transportbandes angebracht, welches dazu transparent sein muß.

Dabei stellt sich das Problem, daß das Transportband zugleich wegen der ständigen Verformung an Transport- und Umlenkrollen biegeweich, wegen zu transportierender scharfkantiger harter Gegenstände und der Verunreinigung durch aus Verpackungen fallendem staubförmigem oder kristallinem Gut wie beispielsweise Zucker oder Salz kratz- und chemikalienfest und über lange Zeit transparent sein muß.

Aus US-A-3757090 ist es bekannt eine Lücke zwischen zwei Transportbändem vorzusehen und in dieser Lücke ein Gehäuse mit der Abtastvorrichtung anzuordnen. Die Gegenstände die von einem Transportband zum anderen wechseln können so von unten abgetastet werden.

Es ist daher die Aufgabe der Erfindung, eine Vorrichtung zum optischen Abtasten einer auf einem Gegenstand aufgebrachten maschinenlesbaren Markierung vorzuschlagen, die eine Abtastung auch bei einem mit der Markierungsseite auf einem Transportband liegenden kleinen Gegenstand ermöglicht.

Die Aufgabe wird durch die Merkmale des Anspruchs 1.

Entsprechend der Erfindung ist die Abtasteinrichtung in einen Zylinder aus einem kratz- und chemikalienfesten transparenten Material eingebaut, dessen Achse parallel zu den Umlenkungen der Transportbänder ausgerichtet ist, und der mit einer zur Transportgeschwindigkeit der Transporteinrichtung synchronen UmfangsgeschW.ndigkeit drehbar ist.

Bei entsprechendem Durchmesser kann in einen solchen Zylinder auch ein Flächenscanner eingebaut werden. Zugleich trägt die synchron mit den Transportbändern mitlaufende Umfangsfläche zur Transportsicherheit kleinerer Gegenstände bei.

Entsprechend einer bevorzugten Weiterbildung der vorgenannten Erfindung greift am Umfang des Zylinders eine Reinigungseinrichtung an, die eventuell an dem Zylinder haftende Fremdpartikel abwischt. Hierbei kann es sich beispielsweise um eine Bürste handeln.

Liegt der Oberflächenbereich des Hohlkörpers, der der den Gegenstand abstützenden Fläche der Transporteinrichtung zugewandt ist, mit letzterer in einer Ebene, so erfährt der Transport kleiner Gegenstände von einem Transportband auf das andere noch eine zusätzliche Unterstützung.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert. Es zeigt
- Fig. 1: eine Vorrichtung zum optischen Abtasten einer auf einem Gegenstand aufgebrachten maschinenlesbaren Markierung in schematischer Seitenansicht,
- Fig. 2: die Vorrichtung aus Fig. 1 in Draufsicht,
- Fig. 3: ein Ausführungsbeispiel einer Vorrichtung zum optischen Abtasten einer auf einem Gegenstand aufgebrachten maschinenlesbaren Markierung in schematischer Seitenansicht,
- Fig. 4: einen Schnitt entlang der Linie IV-IV durch die in Fig. 3 dargestellte Vorrichtung.

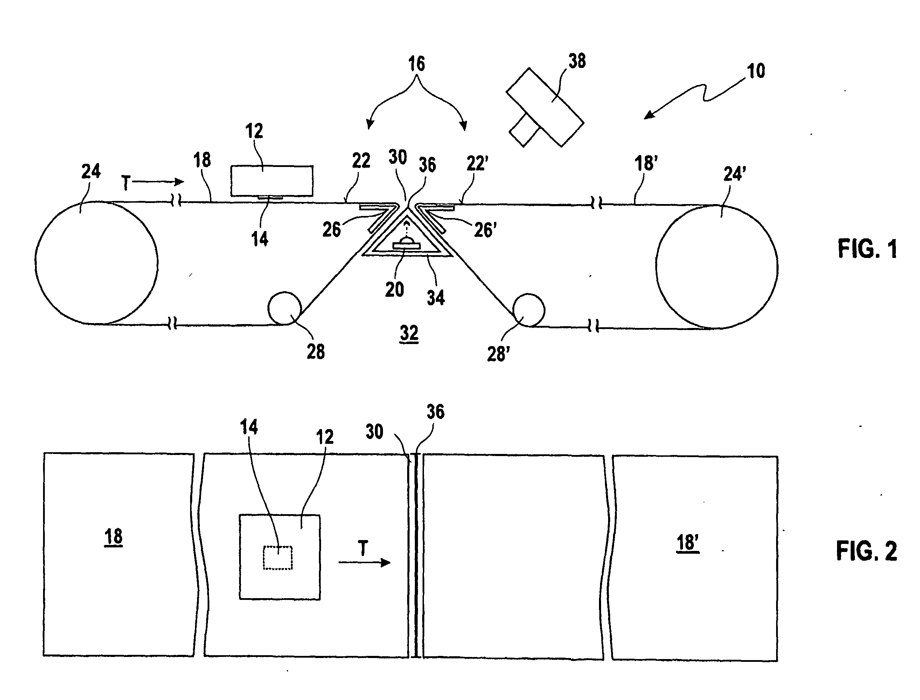

Die Figuren 1 und 2 zeigen eine Vorrichtung 10 zum optischen Abtasten einer auf der unten liegenden Fläche eines Gegenstandes 12 aufgebrachten maschinenlesbaren Markierung, vorzugsweise einer Strichcodemarkierung 14. Sie umfaßt eine Transporteinrichtung 16 mit zwei in Transportrichtung T hintereinander liegenden endlosen Transportbändern 18, 18' und eine als Fotoelementzeile ausgebildete Abtasteinrichtung 20 für die Strichcodemarkierung 14, die in oder unter einer den Gegenstand abstützenden Fläche 22, 22' der Transporteinrichtung 16 angeordnet ist. Die Abtasteinrichtung 20 kann aber auch als Linienscanner ausgebildet sein.

Die Transportbänder 18, 18' sind um eine angetriebene Rolle 24 bzw. 24', eine Umlenkung 26 bzw. 26' und um eine den unteren Riementrum führende Umlenkrolle 28 bzw. 28' herumgeführt, wobei die Transportbänder 18, 18' derart spiegelbildlich zueinander angeordnet sind, daß deren Umlenkungen 26 und 26' einander zugekehrt sind. Zwischen den um die Umlenkungen 26 und 26' herumgeführten Transportbändern 18 und 18' bleibt eine Lücke in Form eines sich über die Breite der Transportbänder 18, 18' erstreckenden Spaltes 30 frei. Die Umlenkrollen 28 bzw. 28' sind gegenüber den Umlenkungen 26 bzw. 26' in Richtung der Rollen 24 bzw. 24' zurückversetzt, so daß sich unterhalb des Spaltes 30 ein Freiraum 32 mit im wesentlichen dreieckigem Querschnitt ergibt.

In den Freiraum 32 ist ein Hohlkörper 34 mit dreieckigem Querschnitt so eingesetzt, daß eine Dreieckskante 36 im Spalt 30 oder unmittelbar unter diesem liegt. Der Fiohlkörper 34 oder zumindest dessen in den Spalt 30 weisende Dreieckskante 36 ist aus einem transparenten kratz- und chemikalienfesten Material wie z.B. Hartglas hergestellt. In den Hohlkörper 34 ist die Abtasteinrichtung 20 so eingebaut, daß ihre Abtastrichtung durch die transparente Dreieckskante 36 und durch den Spalt 30 verläuft. Oberhalb der Fläche 22, 22' ist symbolhaft eine weitere Abtasteinrichtung 38 angedeutet, die der Erfassung von Strichcodemakierungen dient, welche sich an einer oben liegenden oder seitlichen Fläche eines Gegenstandes 12 befinden mögen. Der Aufbau der weiteren Abtasteinrichtung 38 ist beispielsweise aus der EP 0 338 376 A2 bekannt.

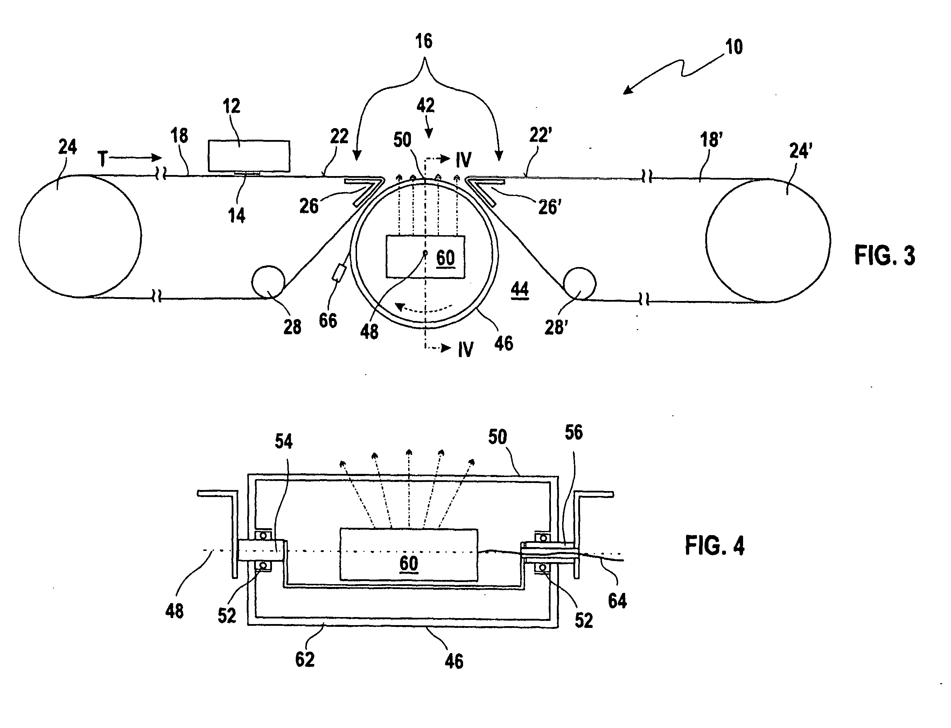

Figur 3 zeigt in einem Ausführungsbeispiel der Erfindung eine zweite Vorrichtung 50 zum optischen Abtasten einer auf der unten liegenden Fläche eines Gegenstandes 12 aufgebrachten maschinenlesbaren Markierung. Dabei sind Fig. 1 gleichende Teile mit den dort bereits verwendeten Bezugszeichen versehen. Bei der maschinenlesbaren Markierung handelt es sich vorzugsweise um eine Strichcodemarkierung 14. Die zweite Vorrichtung 50 umfaßt wiederum eine Transporteinrichtung 16, die sich von der oben beschriebenen nur durch eine breitere Lücke 42 zwischen den um die Umlenkungen 26 und 26' herumgeführten Transportbändern 18 und 18' unterscheidet.

In den unter der Lücke 42 befindlichen Freiraum 44 ist ein hohler Zylinder 46 aus einem transparenten kratz- und chemikalienfesten Material wie z.B. Hartglas so eingesetzt, daß seine Achse 48 parallel zu den Umlenkungen 26, 26' verläuft und die Scheitellinie 50 seiner Umfangsfläche mit der Fläche 22, 22' der Transporteinrichtung 16 in einer Ebene liegt.

In die Stirnseiten des Zylinders 46 ist jeweils ein Kugellager 52 eingesetzt, mit deren Hilfe der Zylinder 46 auf vorrichtungsfesten Zapfen 54, 56 drehbar gelagert ist. Der eine Zapfen 56 ist mit einer axialen Bohrung 58 versehen. Der Zylinder 46 ist über einen nicht dargestellten Antrieb mit einer zur Transportgeschwindigkeit der Transporteinrichtung 16 synchronen Umfangsgeschwindigkeit und -richtung drehbar. In den Zylinder 46 ist ein Flächenscanner 60 auf einer an den Zapfen 54, 56 angebrachten Halterung 62 so eingebaut, daß er sich mit dem Zylinder 46 nicht mitdreht und seine Abtastrichtung ständig in die Lücke 42 gerichtet ist. Die elektrischen Anschlüsse 64 des Flächenscanners 60 sind durch die Bohrung 58 aus dem Zylinder 46 herausgeführt. Es ist auch möglich, den Zylinder einseitig zu lagern. Ein hohler Zapfen wie der Zapfen 56 erübrigt sich dann.

Mit der Oberfläche des Zylinders 46 steht eine sich über dessen Länge erstreckende Bürste 66 in schleifendem Kontakt. Diese dient zum einen dazu, an der Oberfläche haftende Partikel abzufegen und zum anderen elektrostatische Aufladungen abzuführen.

## Patentansprüche

1. Vorrichtung (10; 40) zum optischen Abtasten einer auf einem Gegenstand (12) aufgebrachten maschinenlesbaren Markierung (14), umfassend eine Transporteinrichtung (16) mit in Transportrichtung (T) hintereinander liegenden endlosen Transportbändern (18, 18') und eine Abtasteinrichtung (20; 60) für die maschinenlesbare Markierung (14), die in oder unter einer den Gegenstand (12) abstützenden Fläche (22, 22') der Transporteinrichtung (16) angeordnet ist, wobei die Abtastung der maschinenlesbaren Markierung (14) durch eine Lücke (30; 42) zwischen einem ersten Transportband (18) und einem zweiten Transportband (18') der Transporteinrichtung (16) erfolgt und die Abtasteinrichtung (20; 60) in einen wenigstens teilweise in die Lücke (30; 42) eintauchenden Hohlkörper (34; 46) eingebaut ist, **dadurch gekennzeichnet, dass** der Hohlkörper ein Zylinder (46) aus einem kratz- und chemikalienfesten transparenten Material ist, dessen Achse (48) parallel zu den Umlenkungen (26, 26') ausgerichtet und mit einer zur Transportgeschwindigkeit der Transporteinrichtung synchronen Umfangsgeschwindigkeit antreibbar ist.

2. Vorrichtung nach Anspruch 1, **dadurch gekennzeichnet, dass** am Umfang des Zylinders (46) eine Reinigungseinrichtung (66) angreift.

3. Vorrichtung nach Anspruch 1, **dadurch gekennzeichnet, dass** (36) der Hohlkörper (34; 46) aus Hartglas besteht.

4. Vorrichtung nach Anspruch 1, **dadurch gekennzeichnet, dass** die um einander zugewandten Umlenkungen (26, 26') herumgeführten Bereiche des ersten Transportbandes (18) und des zweiten Transportbandes (18') unmittelbar an den Hohlkörper (34; 46) angrenzen.

5. Vorrichtung nach einem der Ansprüche 1 bis 4, **dadurch gekennzeichnet, dass** der Hohlkörper (34) einen der Querschnittsform der Lücke (30) angepaßten Querschnitt hat.

6. Vorrichtung nach einem der Ansprüche 1 bis 5, **dadurch gekennzeichnet, dass** die Abtasteinrichtung (20) einen Linienscanner oder eine Fotoelementzeile umfaßt.

7. Vorrichtung nach einem der vorhergehenden Ansprüche, **dadurch gekennzeichnet, dass** der Oberflächenbereich des Hohlkörpers (34; 46), der der den Gegenstand abstützenden Fläche (22, 22') der Transporteinrichtung (16) zugewandt ist, mit letzterer in einer Ebene liegt.

## Claims

1. Apparatus (10; 40) for optically scanning a machine-readable marking (14) applied to an object (12), comprising a transport device (16) having endless transport belts (18, 18') located one after another in the transport direction (T) and a scanning device (20; 60) for the machine-readable marking (14), which is arranged in or under a surface (22, 22') belonging to the transport device (16) and supporting the object (12), the machine-readable marking (14) being scanned through a gap (30; 42) between a first transport belt (18) and a second transport belt (18') of the transport device (16) and the scanning device (20; 60) being incorporated in a hollow body (34; 46) which penetrates at least partly into the gap (30; 42), **characterized in that** the hollow body is a cylinder (46) of a scratch-resistant and chemical-resistant transparent material, whose axis (48) is aligned parallel to the deflections (26, 26') and which can be driven at a circumferential speed which is synchronous with the transport speed of the transport device.

2. Apparatus according to Claim 1, **characterized in that** a cleaning device (66) acts on the circumference of the cylinder (46).

3. Apparatus according to Claim 1, **characterized in that** the hollow body (34; 46) consists of hard glass.

4. Apparatus according to Claim 1, **characterized in that** the regions of the first transport belt (18) and of the second transport belt (18') that are led around mutually facing deflections (26, 26') adjoin the hollow body (34; 46) directly.

5. Apparatus according to one of Claims 1 to 4, **characterized in that** the hollow body (34) has a cross section matched to the cross-sectional shape of the gap (30).

6. Apparatus according to one of Claims 1 to 5, **characterized in that** the scanning device (20) comprises a line scanner or a row of photo elements.

7. Apparatus according to one of the preceding claims, **characterized in that** the surface region of the hollow body (34; 46), which faces that surface (22, 22') of the transport device (16) which supports the object lies in one plane with the said transport device (16).

## Revendications

1. Dispositif (10; 40) de balayage optique de marques (14), déposées sur un objet (12) et pouvant être lues par une machine, comprenant un dispositif (16) de convoyage ayant des bandes (18, 18') convoyeuses sans fin, disposées les unes derrière les autres dans la direction (T) de transport et un dispositif (20; 60) de balayage des marques (14), qui peuvent être lues à la machine, qui est disposé dans ou sous une surface (22, 22') du dispositif (16) de convoyage soutenant l'objet (12), le balayage des marques (14) qui peuvent être lues à la machine s'effectuant par un intervalle (30; 42) entre une première bande (18) convoyeuse et une deuxième bande (18') convoyeuse du dispositif (16) convoyeur et le dispositif (20; 60) de balayage étant monté dans un corps (34; 46) creux plongeant au moins en partie dans l'intervalle (30; 42), **caractérisé en ce que** le corps creux est un cylindre (46) en un matériau transparent, résistant aux égratignures et aux produits chimiques, dont l'axe (48) est dirigé parallèlement aux renvois (26, 26') et peut être entraîné à une vitesse périphérique synchrone de la vitesse de convoyage du dispositif de convoyage.

2. Dispositif suivant la revendication 1, **caractérisé en ce qu'**un dispositif (66) de nettoyage intervient sur le pourtour du cylindre (46).

3. Dispositif suivant la revendication 1, **caractérisé en ce que** (36) le corps (34; 46) creux est en verre dur.

4. Dispositif suivant la revendication 1, **caractérisé en ce que** les parties de la première bande (18) convoyeuse et de la deuxième bande (18') convoyeuse, qui passent sur des renvois (26, 26') tournés l'un vers l'autre, sont directement voisins du corps (34; 46) creux.

5. Dispositif suivant l'une des revendications 1 à 4, **caractérisé en ce que** le corps (34) creux a une section transversale adaptée à la forme de la section transversale de l'intervalle (30).

6. Dispositif suivant l'une des revendications 1 à 5, **caractérisé en ce que** le dispositif (20) de balayage comprend un scanner linéaire ou une ligne de cellules photoélectriques.

7. Dispositif suivant l'une des revendications précédentes, **caractérisé en ce que** la partie de surface du corps (34; 46) creux, qui est tournée vers la surface (22, 22') du dispositif (16) de convoyage soutenant l'objet, est dans un plan avec celle-ci.
